# EUROPÄISCHE PATENTSCHRIFT

(11) **EP 0 816 435 B1**
(45) Veröffentlichungstag und Bekanntmachung des Hinweises auf die Patenterteilung: **28.08.2002**
(21) Anmeldenummer: 97110508.5
(22) Anmeldetag: 26.06.1997
(51) Int. Cl.: C08L 71/12, C08L 25/02, C08L 85/02, C08K 5/00

(54) **Flammwidrige thermoplastische Formmassen mit verbesserter Stabilität**
Flame-retardant thermoplastic moulding matters having improved stability
Matières de moulage thermoplastiques ignifugées ayant une stabilité améliorée

(30) Priorität: 26.06.1996 DE 19625604
(43) Veröffentlichungstag der Anmeldung: 07.01.1998
(73) Patentinhaber: BASF AKTIENGESELLSCHAFT, 67056 Ludwigshafen (DE)
(72) Erfinder: Weber, Martin, Dr., 67487 Maikammer (DE); Seibring, Joachim, Dr., 67251 Freinsheim (DE)
(74) Vertreter: Kinzebach, Werner, Dr.

(56) Entgegenhaltungen:
- EP-A- 0 036 278
- EP-A- 0 038 183
- EP-A- 0 630 938
- PATENT ABSTRACTS OF JAPAN vol. 007, no. 061 (C-156), 15. März 1983 (1983-03-15) & JP 57 207642 A (ADEKA ARGUS KAGAKU KK), 20. Dezember 1982 (1982-12-20)
- PATENT ABSTRACTS OF JAPAN vol. 017, no. 079 (C-1027), 17. Februar 1993 (1993-02-17) & JP 04 279660 A (ASAHI CHEM IND CO LTD), 5. Oktober 1992 (1992-10-05)

## Beschreibung

Die vorliegende Erfindung betrifft flammwidrige, Polyphenylenether und vinylaromatische Polymere enthaltende Formmassen mit verbesserter Stabilität, die Verwendung der erfindungsgemäßen thermoplastischen Formmassen zur Herstellung von Fasern, Folien und Formkörper, sowie die unter Verwendung der erfindungsgemäßen Formmassen erhältlichen Fasern, Folien und Formkörper.

Polymermischungen aus Polyphenylenethern (PPE) und Styrolpolymerisaten sind z.B. aus den US-Patenschriften 3,383,435; 4,128,602 sowie 4,128,603 bekannt. Solche Formmassen eignen sich zur Herstellung von Formteilen, die sich im Vergleich zu schlagzähmodifizierten Styrolpolymerisaten (HIPS, High Impact Polystyrol), die nicht mit Polyphenylenethern abgemischt sind, durch bessere Wärmeformbeständigkeit auszeichnen. Eine ausführliche Beschreibung der Eigenschaften dieser Polymermischungen findet sich auch in L. Bottenbruch, "Technische Polymer-Blends", Kunststoff Handbuch 3/2, Hanser Verlag, München, 1993.

Ein wesentlicher Vorteil der Polymerblends aus Polyphenylenether und Styrolpolymerisaten ist darin zu sehen, daß durch Zusatz halogenfreier Flammschutzmittel, wobei insbesondere phosphorhaltige Verbindungen zu erwähnen sind, Formmassen hergestellt werden können, die flammwidrig sind und daher für viele Anwendungen im Bereich der Elektrotechnik eingesetzt werden können. Für den Einsatz im Anwendungsbereich Elektrotechnik ist insbesondere die Prüfung der Flammwidrigkeit nach UL 94 (in J. Troitzsch, 'International Plastics Flammability Handbook", S. 346 ff., Hanser Verlag, München, 1990) ausschlaggebend. Da Blends aus PPE und HIPS vielfach als Gehäusematerial eingesetzt werden, ist außerdem eine wirksame Stabilisierung gegenüber Wärme- und Lichteinflüssen erforderlich.

Es besteht daher Bedarf nach neuen, wirksameren Stabilisatoren für Blends aus Polyphenylenether und vinylaromatischen Polymer, wie z.B. schlagfestem Polystyrol.

Der Stand der Technik macht verschiedene Vorschläge, wie die Wärmestabilität thermoplastischer Formmassen weiter verbessert werden kann.

So ist z.B. aus der EP 0 038 183 bekannt, daß durch Zugabe von Phosphonsäuren der allgemeinen Formel Rₐ(O)P(OR_{b})(OR_{c}) oder Derivaten davon die Wärmestabilität von Polyphenylenether-Harzen verbessert werden kann. Außerdem wird darin vorgeschlagen, zur weiteren Verbesserung der Wärmestabilität der Harze eine synergistisch wirkende Kombination aus sterisch gehindertem Phenol und Phosphonsäure, bzw. einem Derivat davon zuzusetzen. Die Wärmestabilität der Harze soll darüber hinaus noch weiter erhöht werden können, wenn man zusätzlich ein organisches Mono- oder Polyphosphit, wie z.B Triphenylphosphit, zugibt.

Aus der EP 0 036 278 sind ebenfalls PPE-Harze bekannt, deren Wärmestabilität durch Zugabe einer Phosphonigen Säure der allgemeinen Formel R_{d}P(ORₑ) (OR_{f}) oder eines Derivates davon erhöht ist. Durch Zugabe einer synergistischen Kombination aus sterisch gehindertem Phenol und Phosphoniger Säure kann die Wärmestabilität der Harze weiter erhöht werden. Die besten Ergebnisse sollen auch hier erst nach weiterer Zugabe eines organischen Mono- oder Polyphosphits erzielt werden. Als Beispiele für Derivate der Phosphonigen Säure sind in der EP 0 036 278 verschiedene Ester der Monophosphonigen Säure sowie Diphosphonite genannt.

Sowohl in der EP 0 038 183 als auch in der EP 0 036 278 wird die Verwendung von bromhaltigen Flammschutzmitteln oder von monophosphathaltigen Flammschutzmitteln, wie Triphenylphosphat und Tricresylphosphat, vorgeschlagen.

Die JP-A-57207642 beschreibt PPE/HIPS-Blends, bei denen neben Resorcinoldiphenylphosphat (RDP) auch Triphenylphosphit eingesetzt wird. Diese Formmassen sollen eine verbesserte Wärmebeständigkeit und Verarbeitbarkeit aufweisen.

Aus der EP 0 467 113 sind außerdem flammwidrige Formmassen aus PPE/HIPS bekannt, die ein phosphororganisches Flammschutzmittel enthalten können. Außerdem wird vorgeschlagen, Phosphite zur Verbesserung der Zugfestigkeit der aus den Formmassen hergestellten Gegenstände zuzusetzen.

In der JP-A-04279660 wird vorgeschlagen, zur Verhinderung der Gelbildung während der Verarbeitung einer PPE/HIPS-Formmasse ein Metalloxid, wie z.B. ZnO, zuzusetzen. Als Flammschutzmittel werden in diesen Formmassen Oligophosphate, wie Phenylresorcinolpolyphosphat vorgeschlagen. Außerdem können diese Formmassen Octadecyl-3-(3,5-di-tert.-butyl-4-hydroxyphenyl)propionat enthalten.

Die bisher beschriebenen Kombinationen aus Flammschutzmitteln und Stabilisatoren genügen jedoch den in der Praxis gestellten Anforderungen nicht.

Es ist deshalb Aufgabe der vorliegenden Erfindung, flammwidrige Formmassen auf Basis von Polyphenylenether und vinylaromatischen Polymeren zur Verfügung zu stellen, die gegenüber Formmassen bekannten Typs verbesserte Eigenschaftsprofile aufweisen. Insbesondere besteht die Aufgabe darin PPE/HIPS-Formmassen hinsichtlich ihres Spannungsrißverhaltens, der Wärmealterung und gegebenenfalls der Fließfähigkeit zu verbessern.

Überraschenderweise wurde diese Aufgabe gelöst durch Bereitstellung von thermoplastischen Formmassen der eingangs bezeichneten Art, die Oligophosphate als Flammschutzmittel und eine Stabilisatorkombination aus sterisch gehindertem Phenol und einem Phosphonit enthalten. Die neuartigen Formmassen besitzen gegenüber herkömmlichen Formmassen ähnlichen Typs ein überraschend deutlich verbessertes Eigenschaftsprofil und insbesonders Vorteile bezüglich des Spannungsrißverhaltens, der Wärmealterung und teilweise auch bezüglich der Fließfähigkeit.

Die mit den erfindungsgemäßen Formmassen verbundenen Vorteile sind insbesondere auch deshalb überraschend, weil aufgrund der Lehre des Standes der Technik nicht erwartet werden konnte, daß durch spezifische Auswahl einer Kombination von Flammschutzmittel und Stabilisator eine weitere Verbesserung des Eigenschaftsprofils erzielbar ist.

Gegenstand der vorliegenden Erfindung ist somit eine flammwidrige thermoplastische Formmasse, enthaltend
A) mindestens einen Polyphenylenether, und
B) mindestens ein vinylaromatisches Polymer, die dadurch gekennzeichnet ist, daß sie
C) mindestens eine Oligophosphorverbindung als Flammschutzmittel und
D) als Stabilisator eine Mischung aus
   D₁) mindestens einem sterisch gehinderten Phenol und
   D₂) mindestens einem Phosphonit
   umfaßt.

Bevorzugt sind insbesondere solche Formmassen, in welchen die Stabilisatormischung in einem Anteil von etwa 0,1 bis etwa 5 Gew.-%, und das Flammschutzmittel in einem Anteil von etwa 1 bis etwa 20 Gew.-%, jeweils bezogen auf das Gesamtgewicht der Formmasse, enthalten ist.

Gemäß einer besonders bevorzugten Ausführungsform betrifft die Erfindung Formmassen, enthaltend
A) etwa 5 bis etwa 97,9 Gew.-% Polyphenylenether,
B) etwa 1 bis etwa 93,9 Gew.-% Styrolpolymerisat,
C) etwa 1 bis etwa 20 Gew.-% Flammschutzmittel,
D) etwa 0,1 bis etwa 5 Gew.-% Stabilisatormischung,
   die jeweils bezogen auf das Gesamtgewicht der Komponente D,
   D₁) etwa 5 bis etwa 95 Gew.-% eines sterisch gehinderten Phenols und
   D₂) etwa 5 bis etwa 95 Gew.-% eines Phosphonits,
E) 0 bis etwa 50 Gew.-% Schlagzähmodifier sowie
F) 0 bis 60 Gew.-% üblicher Zusätze.

Weiterhin betrifft die Erfindung die Verwendung der erfindungsgemäßen Formmassen zur Herstellung flammwidriger Formkörper, Fasern und Folien.

Gegenstand sind außerdem flammwidrige Formkörper, Fasern und Folien, die unter Verwendung der neuartigen Formmassen hergestellt wurden.

Die in den erfindungsgemäßen Formmassen enthaltenen Polyphenylenether (Komponente A) sind an sich bekannt. Die Polyphenylenether sind in den erfindungsgemäßen Formmassen in einer Menge von etwa 5 bis etwa 97,9, vorzugsweise etwa 15 bis etwa 87,9 und insbesondere etwa 20 bis etwa 82,4 Gew.-%, bezogen auf das Gesamtgewicht der Formmasse, enthalten.

Komponente A umfaßt insbesondere Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, langkettige Alkylreste mit bis zu 20 Kohlenstoffatomen, wie Lauryl und Stearyl sowie kurzkettige Alkylreste mit 1 bis 4 Kohlenwasserstoffatomen, die vorzugsweise kein α-ständiges tertiäres Wasserstoffatom aufweisen, z.B. Methyl-, Ethyl-, Propyl- oder Butylreste, zu nennen. Die Alkylreste können wiederum durch Halogenatome, wie Chlor oder Brom, oder durch eine Hydroxylgruppe einfach oder mehrfach substituiert sein. Weitere Beispiele möglicher Substituenten sind Alkoxyreste, vorzugsweise mit 1 bis zu 4 Kohlenstoffatomen oder gegebenenfalls durch Halogenatome und/oder C₁-C₄-Alkylgruppen gemäß obiger Definition einfach oder mehrfach substituierte Phenylreste. Ebenfalls geeignet sind Copolymere verschiedener Phenole, wie z.B. Copolymere von 2,6-Dimethylphenol und 2,3,6-Trimethylphenol. Selbstverständlich können auch Gemische verschiedener Polyphenylenether eingesetzt werden.

Beispiele für erfindungsgemäß verwendbare Polyphenylenether sind
Poly(2,6-dilauryl-1,4-phenylenether),
Poly(2,6-diphenyl-1,4-phenylenether),
Poly(2,6-dimethoxy-1,4-phenylenether),
Poly(2,6-diethoxy-1,4-phenylenether),
Poly(2-methoxy-6-ethoxy-1,4-phenylenether),
Poly(2-ethyl-6-stearyloxy-1,4-phenylenether),
Poly(2,6-dichlor-1,4-phenylenether),
Poly(2-methyl-6-phenyl-1,4-phenylenether),
Poly(2,6-dibenzyl-1,4-phenylenether),
Poly(2-ethoxy-1,4-phenylenether),
Poly(2-chlor-1,4-phenylenether),
Poly(2,5-dibrom-1,4-phenylenether).

Bevorzugt werden Polyphenylenether eingesetzt, die als Substituenten Alkylreste mit 1 bis 4 Kohlenstoffatomen aufweisen, wie
Poly(2,6-dimethyl-1,4-phenylenether),
Poly(2,6-diethyl-1,4-phenylenether),
Poly(2-methyl-6-ethyl-1,4-phenylenether),
Poly(2-methyl-6-propyl-1,4-phenylenether),
Poly(2,6-dipropyl-1,4-phenylenether) und
Poly(2-ethyl-6-propyl-1,4-phenylenether).

Unter Polyphenylenethern im Sinne der Erfindung sollen auch solche verstanden werden, die mit Monomeren, wie Fumarsäure, Maleinsäure oder Maleinsäureanhydrid, modifiziert sind.

Derartige Polyphenylenether sind u.a. in der WO 87/00540 beschrieben.

Insbesondere werden solche Polyphenylenether in den Zusammensetzungen eingesetzt, die ein mittleres Molekulargewicht M_{w} (Gewichtsmittel) von etwa 8 000 bis 70 000, bevorzugt etwa 12 000 bis 50 000 und insbesondere etwa 20 000 bis 45 000 aufweisen.

Dies entspricht einer Grenzviskosität von etwa 0,18 bis 0,7, bevorzugt von etwa 0,25 bis 0,55, und insbesondere von etwa 0,30 bis 0,50 dl/g, gemessen in Chloroform bei 25°C.

Die Bestimmung der Molekulargewichtsverteilung erfolgt im allgemeinen mittels Gelpermeationschromatographie (Shodex-Trennsäulen 0,8 x 50 cm des Typs A 803, A 804 und A 805 mit THF als Elutionsmittel beim Raumtemperatur). Die Lösung der Polyphenylenether-Proben in THF erfolgt unter Druck bei 110°C, wobei 0,16 ml einer 0,25 Gew.-%igen Lösung injiziert werden.

Die Detektion erfolgt im allgemeinen mit einem UV-Detektor. Die Eichung der Säulen wurde mit Polyphenylenether-Proben durchgeführt, deren absolute Molekulargewichtsverteilung durch eine GPC-Laser-Lichtstreuungskombination bestimmt wurde.

Das vinylaromatische Polymer (Komponente B) ist in den erfindungsgemäßen Formmassen in Mengen von etwa 1 bis etwa 94, vorzugsweise etwa 10 bis etwa 82,9 und insbesondere etwa 15 bis etwa 77,5 Gew.-%, bezogen auf das Gesamtgewicht der Formmasse, enthalten. Die Komponente B ist ein vinylaromatisches Polymer, das vorzugsweise mit dem eingesetzten Polyphenylenether verträglich ist. Es kommen sowohl Homo- als auch Copolymerisate von vinylaromatischen Monomeren mit 8 bis 12 C-Atomen in Betracht, welche in Gegenwart eines Kautschuks hergestellt werden. Der Kautschukgehalt beträgt etwa 5 bis 25 Gew-%, vorzugsweise etwa 8 bis 17 Gew.-%. Geeignet sind vor allem schlagfestmodifizierte Polystyrole oder Copolymere aus Styrol und anderen vinylaromatischen Verbindungen. Derartige schlagzähmodifizierte Polystyrole sind allgemein als sogenanntes HIPS bekannt und größtenteils im Handel erhältlich. Sie weisen eine Viskositätszahl (VZ) der Hartmatrix von etwa 50 bis etwa 130 ml/g (0,5 %ig in Toluol bei 23°C), vorzugsweise von etwa 60 bis etwa 90 ml/g, auf.

Als monovinylaromatische Verbindungen kommen dabei kern- oder seitenkettenalkylierte Styrole in Betracht. Als Beispiele seien Chlorstyrol, o-Methylstyrol, p-Methylstyrol, Vinyltoluol und p-t-Butylstyrol genannt. Vorzugsweise wird jedoch Styrol allein verwendet.

Die Homopolymerisate werden im allgemeinen nach den bekannten Verfahren in Masse, Lösung und Suspension hergestellt (vgl. Ullmanns Enzyklopädie der techn. Chemie, Band 19, Seiten 265 bis 272, Verlag Chemie, Weinheim 1980). Die Homopolymerisate können Molekulargewichte M_{w} von etwa 3 000 bis 300 000 (Gewichtsmittel) aufweisen, die nach üblichen Methoden bestimmt werden können. Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage. Geeignete Beispiele für solche C₁-C₁₀-Alkylgruppen umfassen Methyl, Ethyl, n- und i-Propyl, n- und tert.-Butyl, sowie gegebenenfalls verzweigtes Pentyl, Hexyl, Heptyl, Octyl, Nonyl und Decyl. Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in US 4,360,618, US 4,405,753 und in der Veröffentlichung von J.R. Fried, G.A. Hanna, Polymer Eng. Scie., Band 22 (1982), Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980), beschrieben sind. Die Copolymerisate weisen im allgemeinen Gewichtsmittel des Molekulargewichts (M_{w}) von etwa 10 000 bis etwa 300 000 auf, die nach üblichen Methoden bestimmt werden können.

Erfindungsgemäß bevorzugt wird als Komponente B schlagfest modifiziertes Polystyrol verwendet.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2,694,692 beschrieben ist, und Verfahren zur Massesuspensionspolymerisation, wie sie beispielsweise in der US-Patentschrift 2,862,906 beschrieben sind. Selbstverständlich sind auch andere Verfahren anwendbar, sofern die gewünschte Teilchengröße der Kautschukphase eingestellt wird.

Als Flammschutzmittel (Komponente C) enthalten die erfindungsgemäßen Formmassen etwa 1 bis etwa 20, vorzugsweise etwa 2 bis etwa 19 und insbesondere etwa 2,5 bis etwa 18 Gew.-% wenigstens eines Flammschutzmittels der allgemeinen Formel (I), (II) oder (III): 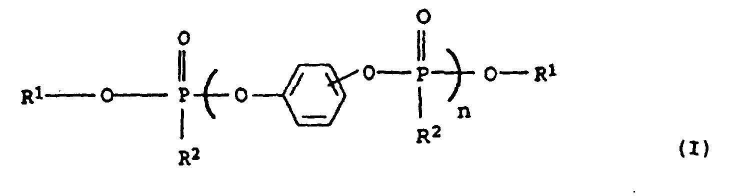 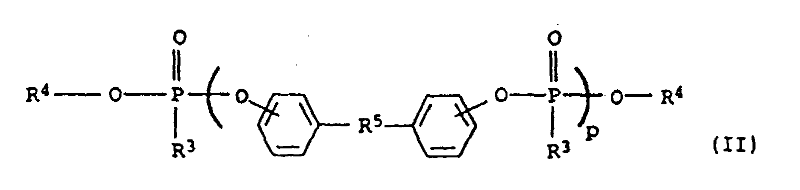 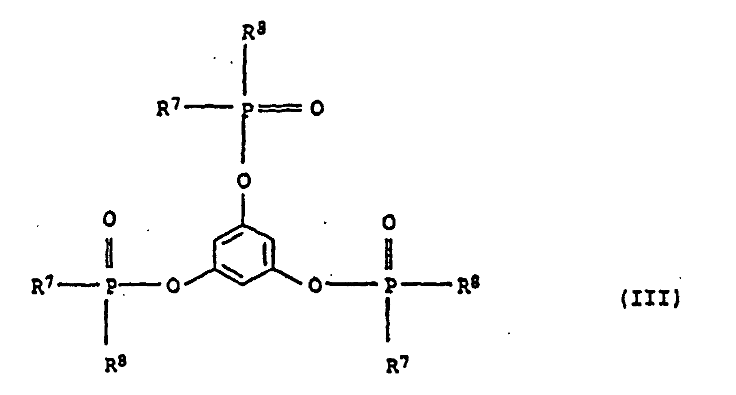 worin
- R¹ und R⁴: unabhängig voneinander für gegebenenfalls substituiertes Alkyl oder Aryl stehen;
- R², R³, R⁷ und R⁸: unabhängig voneinander für gegebenenfalls substituiertes Alkoxy oder Aryloxy stehen.
- R⁵: für Alkylen, -SO₂-, -CO-, -N=N- oder -(R⁶)P(O)- steht, worin
- R⁶: für gegebenenfalls substituiertes Alkyl, Aryl oder Alkylaryl steht und
- n und p: unabhängig voneinander einen, gegebenenfalls ganzzahligen, Wert von 1 bis 30 einnehmen.

Geeignete Substituenten in Verbindungen der Formeln (I), (II) und (III) sind Cyano, Hydroxy, C₁-C₄-Alkyl und Halogen, wie F, Cl, Br, J.

Bevorzugte Alkylreste in Verbindungen der Formel (I), (II) und (III) sind C₁-C₂₀-Alkyl, insbesondere C₁-C₁₂-Alkyl, wie z.B. Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und Cyanoethyl.

Bevorzugte Arylreste in Verbindungen der Formeln (I), (II) und (III) sind Phenyl und Naphthyl sowie einfach oder mehrfach substituierte Reste, wie Tolyl, Xylyl, Mesityl und Cresyl.

Bevorzugte Alkylarylreste in Verbindungen der Formeln (I), (II) und (III) sind C₁-C₂₀-Alkylaryl- und insbesondere C₁-C₁₂-Alkylarylreste, wobei Alkylteil und Arylteil wie oben definiert sind.

Bevorzugte Cycloalkylgruppen in Verbindungen der Formeln (I), (II) und (III) umfassen C₃-C₁₀-Cycloalkylgruppen, wie Cyclobutyl, Cyclopentyl, cyclohexyl und Cycloheptyl.

Bevorzugte Alkoxyreste in Verbindungen der Formeln (I), (II) und (III) sind C₁-C₂₀-Alkoxyreste, wobei der C₁-C₂₀-Alkylteil wie oben definiert ist.

Bevorzugte Aryloxyreste in Verbindungen der Formeln (I), (II) und (III) sind solche, worin der Arylanteil wie oben definiert ist.

Bevorzugte Alkylenreste in Verbindungen der Formeln (I), (II) und (III) sind C₁-C₆-Alkylenreste, wie Methylen, Ethylen, Propylen und Hexylen.

Die Herstellung von Phosphorsäureestern ist allgemein beschrieben in Houben-Weyl, Methoden der organischen Chemie, Bd. XII/2, Thieme Verlag, 1972. Bevorzugt werden die erfindungsgemäß verwendeten Verbindungen durch Umesterung unter Basenkatalyse bzw. durch Umsetzung von Phosphoroxichlorid mit Phenolen unter Katalyse von Magnesium- bzw. Aluminiumchlorid erhalten. Geeignete Verbindungen erhält man durch Umsetzung von Bisphenolen (vgl. z. B. die in Ullmann's Encyclopedia of Industrial Chemistry, 5. Auflage, Bd. A19, S. 349 genannten Bisphenole) mit Phosphaten, wie Triphenylphosphat. Bevorzugt verwendet man die handelsüblichen Produkte auf Basis von Resorcindiphenylphosphat sowie die kommerziell erhältlichen Umsetzungsprodukte von Bisphenol A und Triphenylphosphat. Dabei ist zu beachten, daß die technisch verfügbaren Produkte üblicherweise jeweils Mischungen verschiedener Oligomere bzw. Isomere darstellen.

Des weiteren können Mischungen der höheren Phosphate und Monophosphate bzw. Monophosphinoxide in jedem Mischungsverhältnis eingesetzt werden.

Als Komponente D weisen die thermoplastischen Formmassen etwa 0,1 bis 10 Gew.-%, insbesondere etwa 0,5 bis etwa 5 Gew.-%, einer Stabilisatormischung, enthaltend
D₁) 5 bis 95 Gew.-%, insbesondere 40 bis etwa 60 Gew.-%, eines sterisch gehinderten Phenols und
D₂) 5 bis 95 Gew.-%, insbesondere etwa 40 bis etwa 60 Gew.-% eines Phosphonits (jeweils bezogen auf die Komponente D) auf.

Das sterisch gehinderte Phenol ist vorzugsweise ausgewählt unter Verbindungen der allgemeinen Formel 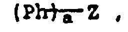 worin
- a: einen ganzzahligen Wert von 1 bis 4 bedeutet,
- Z: für ein Wasserstoffatom oder wenn a für 2, 3 oder 4 steht, für eine Brückengruppe mit 2, 3 oder 4 gebundenen Ph-Gruppen steht
- Ph: für eine sterisch gehinderte Phenolgruppe der Formel (IV) oder (V) steht, 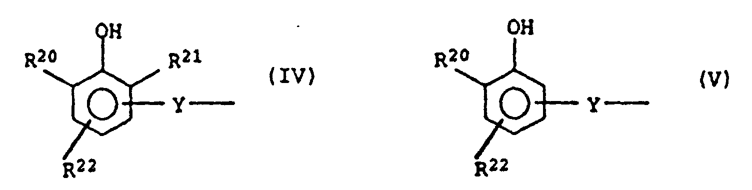
worin
- R²⁰: für einen geradkettigen oder verzweigten C₄-C₁₀-Alkylrest steht,
- R²¹: für ein Wasserstoffatom steht oder wie R²⁰ definiert ist,
- R²²: ausgewählt ist unter einem Wasserstoffatom, Alkyl, Alkoxy, Alkoxycarbonylalkyl, -P(O)(OR²³)₂, worin R²³ für Niedrigalkyl steht, Amino, gegebenenfalls substituiertem Arylamino oder gegebenenfalls substituiertem Heteroarylamino; und
- Y: für eine chemische Bindung oder Carbonylalkyl (-Alkyl-C(O)-), wie insbesondere -C₁-C₄-C(O)-, steht, wobei die Bindung an Z über die Carbonylgruppe erfolgt.

Wenn a für 2 steht, so steht die Brückengruppe Z vorzugsweise für -S-, -O-, -N-, Alkylen, Cycloalkylen, Cycloalkyliden, oder Diiminoalkylen (-HN-Alkylen-NH-), wobei der Alkylenteil wie oben für die Formeln (I), (II) und (III) definiert ist. Beispiele für geeignete Cycloalkylengruppen sind Cyclopentylen, Cyclohexylen und Cycloheptylen. Beispiele für geeignete Cycloalkylidengruppen sind Cyclopentyliden, Cyclohexyliden und Cycloheptyliden.

Wenn a für 3 steht, so steht die Brückengruppe Z vorzugsweise für

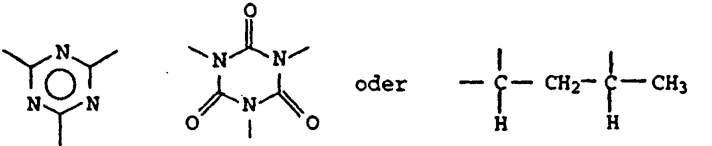

Wenn a für 4 steht, so steht Z bevorzugt für

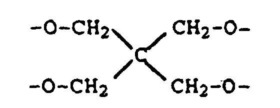

Beispiele für C₄-C₁₀-Alkylreste in Gruppen der Formeln (IV) und (V) sind n-Butyl, sec.-Butyl, i-Butyl, t-Butyl, n-Pentyl, sec.-Pentyl, i-Pentyl, n-Hexyl, 1-, 2- oder 3-Methyl-pentyl; sowie unverzweigtes Heptyl, Octyl, Nonyl und Decyl sowie die ein- oder mehrfach verzweigten Analoga davon. Alkylreste, die nicht in ortho-Stellung zur OH-Gruppe stehen, sind vorzugsweise geradkettige oder verzweigte C₁-C₁₀-Alkylgruppen, wie z.B. Methyl, Ethyl, n-Propyl, sowie C₄-C₁₀-Alkylreste gemäß obiger Definition. Geeignete Alkoxyreste in Phenolgruppen der allgemeinen Formeln (IV) und (V) sind C₁-C₁₀-Alkoxyreste, wobei der C₁-C₁₀-Alkylteil wie oben definiert ist.

Bevorzugte Alkoxycarbonylalkylgruppen sind C₁-C₂₀-Alkoxycarbonyl-C₁-C₆-Alkyl-Reste, wobei der Alkylteil der C₁-C₂₀-Alkoxygruppe beispielsweise C₁-C₁₀-Alkylreste gemäß obiger Definition umfassen kann. Weitere Beispiele sind Decyl, Undecyl, Lauryl, Tridecyl, Myristyl, Pentadecyl, Palmityl, Heptadecyl, Stearyl, Nonadecyl und Arachyl.

Reste R²³ stehen vorzugsweise für C₁-C₆-Alkylreste gemäß obiger Definition. Geeignete Heteroarylaminogruppen umfassen beispielsweise einen 1,3,5-Triazinrest. Geeignete Substituenten von Arylamino- und Heteroarylaminoresten sind Cyano, Hydroxy, C₁-C₄-Alkyl, Halogen, wie z.B. Fluor, Chlor, Brom und Iod, sowie C₁-C₁₀-Alkylthiogruppen, worin der Alkylteil wie oben definiert ist.

Als Komponente D₁ können aus dem Stand der Technik bekannte Stabilisatoren mit phenolischen OH-Gruppen eingesetzt werden. Geeignete Verbindungen mit ein, zwei, drei oder vier sterisch gehinderten Phenolgruppen sind in der EP 0 038 183 beschrieben, worauf hiermit vollinhaltlich Bezug genommen wird. Besonders bevorzugt werden 2,2'-Thio-bis-(4-methyl-6-(1,1-dimethylethyl)-phenol, 3,5-Bis(1,1-dimethylethyl)-4-hydroxybenzyl)-phosphonsäurediethylester sowie Octadecyl-3-(3,5-bis(1,1-dimethylethyl)-4-hydroxyphenyl)-propionat (z.B. Irganox 1076 der Fa. Ciba Geigy).

Das Phosphonit (Komponente D₂) ist vorzugsweise ausgewählt unter Verbindungen der allgemeinen Formel (VI) 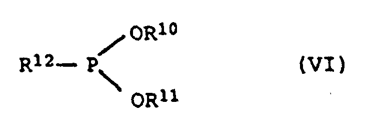 worin
- R¹⁰ und R¹¹: gleich oder verschieden sind und ausgewählt sind unter einem Wasserstoffatom, einem geradkettigen oder verzweigten Alkylrest und einem gegebenenfalls substituierten Aryl- oder Aralkylrest, und
- R¹²: für einen geradkettigen oder verzweigten Alkylrest, für einen gegebenenfalls substituierten Aryl- oder Aralkylrest oder für 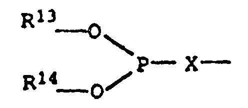
steht, worin
- -X-: für einen gegebenenfalls substituierten Alkylen- oder gegebenenfalls substituierten Arylenrest steht; und
- R¹³ und R¹⁴: unabhängig voneinander die Bedeutungen von R¹⁰ und R¹¹ besitzen.
Beispielsweise können R¹⁰, R¹¹, R¹³ und R¹⁴ für geradkettige oder verzweigte C₁-C₁₀-Alkylreste gemäß obiger Definition stehen.

Insbesondere ist das Phosphonit ausgewählt unter Verbindungen der allgemeinen Formel (VI), worin R¹⁰, R¹¹, R¹³ und R¹⁴ unabhängig voneinander für eine gegebenenfalls ein- oder mehrfach substituierte Aryl- oder Aralkylgruppe stehen, wobei die Substituenten ausgewählt sind unter geradkettigen oder verzweigten C₁-C₁₀-Alkylresten, und X für Phenylen oder Biphenylen steht. Beispiele für geeignete C₁-C₁₀-Alkylreste sind bereits oben angegeben. Bevorzugt sind insbesondere C₄-C₁₀-Substituenten gemäß obiger Definition.

Die als Komponente D₂ erfindungsgemäß verwendeten Phosphonite sind organisch substituierte Ester der Phosphonigen Säure (HP(OH)₂). Geeignete Phosphonite sind beispielsweise auch in der EP 0 036 278 beschrieben, worauf hiermit vollinhaltlich Bezug genommen wird. Bevorzugt sind Diphosphonite, wie Tetrakis-(2,4-bis-(1,1-dimethylethyl)-phenyl-4,4'-diphenylendiphosphonit verwendet.

Die Synthese von Phosphoniten ist beschrieben in Houben-Weyl, "Methoden der Organischen Chemie, Band E1, Organische Phosphorverbindungen I", S. 291 ff, 1982, Thieme Verlag Stuttgart.

Als Schlagzähmodifier (Komponente E) werden schlagzähmodifizierende Kautschuke in Anteilen von bis zu etwa 50, vorzugsweise bis zu etwa 25 und insbesondere bis etwa 20 Gew.-%, bezogen auf das Gesamtgewicht der Formmasse, eingesetzt.

Als Komponente E können natürliche oder synthetische Kautschuke eingesetzt werden. Neben Naturkautschuk sind als Schlagzähmodifier z.B. Polybutadien, Polyisopren oder Mischpolymerisate des Butadiens und/oder Isoprens mit Styrol und anderen Comonomeren, die eine Glasübergangstemperatur, bestimmt nach K.H. Illers und H. Breüer, Kolloidzeitschrift 190 (1), 16-34 (1963), unter -20°C aufweisen. Außerdem können auch entsprechend hydrierte Produkte eingesetzt werden.

Bevorzugte Schlagzähmodifier E sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

Insbesondere sind erfindungsgemäß brauchbar Vinylaromat-Dien-Blockcopolymerisate aus Blöcken, die eine Hartphase (Blocktyp S) und als Weichphase einen Block B/S aus Dien- und Vinylaromaten-Einheiten enthalten, der statistischen Aufbau besitzt. Der Aufbau kann dabei entlang der Kette im statistischen Mittel homogen oder inhomogen sein.

Man erhält ein solches erfindungsgemäß geeignetes kautschukelastisches Blockcopolymerisat dadurch, daß die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäß verwendbares Blockcopolymerisat kann z.B. durch eine der folgenden allgemeinen Formeln (1) bis (11) dargestellt werden:
(1) (S-B/S)ₙ;
(2) (S-B/S)ₙ-S;
(3) B/S-(S-B/S)ₙ;
(4) X-[(S-B/S)ₙ]ₘ+1
(5) X-[(B/S-S)ₙ]ₘ+1;
(6) X-[(S-B/S)ₙ-S]ₘ+1;
(7) X-[(B/S-S)ₙ-B/S]ₘ+1;
(8) Y-[(S-B/S)ₙ]ₘ+1;
(9) Y-[(B/S-S)ₙ]ₘ+1;
(10) Y-[(S-B/S)ₙ-S]ₘ+1;
(11) Y-[(B/S-S)ₙ-B/S]ₘ+1;
wobei
- S: für einen vinylaromatischen Block,
- B/S: für die Weichphase aus einem statistisch aus Dien- und vinylaromatischen Einheiten aufgebauten Block steht,

- X: den Rest eines n-funktionellen Initiators,
- Y: den Rest eines m-funktionellen Kopplungsmittels und
- m,n: natürliche Zahlen von 1 bis 10 bedeuten.

Bevorzugt ist ein Blockcopolymerisat einer der allgemeinen Formeln S-B/S-S, X-[-B/S-S]₂ und Y-[-B/S-S]₂ (Bedeutung der Abkürzungen wie vorstehend) und besonders bevorzugt ein Blockcopolymerisat, dessen Weichphase unterteilt ist in Blöcke
(12) (B/S)₁-(B/S)₂;
(13) (B/S)₁-(B/S)₂-(B/S)₁;
(14) (B/S)₁-(B/S)₂-(B/S)₃;
wobei die Indices 1, 2, 3 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur T_{g} jedes Teilblocks unter 25°C liegt.

Ein Blockcopolymerisat, das mehrere Blöcke B/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block B treten, da es insgesamt lediglich darauf ankommt, daß ein kautschukelastisches Blockcopolymerisat gebildet wird. Solche Copolymerisate können z.B. eine der Strukturen (15) bis (18) haben
(15) B-(B/S)
(16) (B/S)-B-(B/S)
(17) (B/S)₁-B-(B/S)₂
(18) B-(B/S)₁-(B/S)₂.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus etwa 25 bis 75 Gew.-% Styrol und etwa 25 bis 75 Gew.-% Butadien aufgebaut. Insbesondere bevorzugt sind Weichblöcke, die einen Butadienanteil von etwa 34 bis 69 Gew.-% und einen Styrolanteil etwa von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind Butadien-Styrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethyl ether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von etwa 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Die erfindungsgemäßen Polymere haben z.B. einen Anteil von 15 bis 40% an 1,2-Verknüpfungen und 85 bis 60% an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek.-Butyllithium und tert.-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 Mol%, wenn man sie auf die Monomeren bezieht.

Die Polymerisationstemperatur kann etwa 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke A bilden die Hartphase, deren Volumenanteil entsprechend 1 bis 40, bevorzugt 10 bis 30 und besonders bevorzugt 10 bis 20 Vol.-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymers läßt sich auch aus den eingesetzten Monomermengen berechnen, wenn man jedesmal vollständig auspolymerisieren läßt.

Im Sinne der Erfindung eindeutig definiert wird das Blockcopolymere durch den Quotienten aus dem Volumenanteil in Prozent der aus den B/S-Blöcken gebildeten Weichphase und dem Anteil an Dieneinheiten in der Weichphase, der für die Kombination Styrol/Butadien zwischen 25 und 70 Gew.-% liegt.

Durch den statischen Einbau der vinylaromatischen Verbindungen in den Weichblock des Blockcopolymeren und die Verwendung von Lewis-Basen während der Polymerisation wird die Glasübergangstemperatur (T_{g}) beeinflußt. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200.000, insbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch Block B/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-B/S-S, X-[-B/S-S]₂ und Y-[-B/S-S]₂, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke Bn/Sn bietet den entscheidenden Vorteil, daß auch bei einem Zusammensetzungsgradienten innerhalb eines Teilblocks Bn/Sn, wie er sich in der anionischen Polymerisation unter praktischen Bedingungen nur schwer vermeiden läßt, sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur T_{g} absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden B/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, daß die Carbanionen mit einem Alkohol, wie Isopropanol, protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Auch Gemische obiger Kautschuke sind in den erfindungsgemäßen Formmassen einsetzbar.

Als weiteren Bestandteil (Komponente F) können die erfindungsgemäßen Formmassen auch übliche Zusatzstoffe und Verarbeitungshilfsmittel enthalten. Der Anteil dieser Zusätze beträgt im allgemeinen nicht mehr als etwa 60, vorzugsweise nicht mehr als etwa 50 und insbesondere nicht mehr als etwa 40 Gew.-%, bezogen auf das Gesamtgewicht der Komponenten A bis E.

Als Zusatzstoffe seien genannt Hitze- und Lichtstabilisatoren, Entformungsmittel, Färbemittel, wie Farbstoffe und Pigmente, in üblichen Mengen. Des weiteren kommen Gleitmittel, wie Polyethylenwachs, als Zusatzstoffe in Betracht. Weitere Zusatzstoffe sind Verstärkungsmittel, wie Glasfasern, Kohlenstoff-Fasern, aromatische Polyamidfasern und/oder Füllstoffe, Gipsfasern, synthetische Calciumsilikate, Koalin, calciniertes Kaolin, Wollastonit, Talkum und Kreide.

Ruße oder Titandioxid können beispielsweise als Pigmente verwendet werden. Bei Verwendung von TiO₂ liegt die mittlere Teilchengröße in der Regel im Bereich von etwa 50 bis 400 nm, insbesondere von etwa 150 bis 240 nm. Technische Verwendung finden Rutile und Anatas, die gegebenenfalls mit Metalloxiden, z.B. Aluminiumoxiden, Siliciumoxiden, Oxiden des Zn oder Siloxanen, beschichtet sind.

Als Ruße sollen mikrokristalline, feinteilige Kohlenstoffe verstanden werden (vgl. Kunststofflexikon, 7. Auflage 1989). Als geeignet seien die Ofenruße, Acetylenruße, Gasruße sowie durch thermische Herstellung erhältlichen Thermalruße genannt. Die Teilchengrößen liegen vorzugsweise im Bereich von etwa 0,01 bis 0,1 µm und die Oberflächen im Bereich von etwa 10² bis 10⁴ m²/g (BET/ASTM D 3037) bei DBP-Absorptionen von etwa 10² bis 10³ ml/100 g (ASTM D 2414).

Als Komponente F kommen auch Antitropfmittel, wie Teflon sowie halogenfreie Antitropfmittel, in Frage. Geeignete halogenfreie Antitropfmittel sind beispielsweise in der DE 19524585 beschrieben, worauf hiermit Bezug genommen wird.

Diese halogenfreien Antitropfmittel enthalten vorzugsweise Polymere auf der Basis vinylaromatischer Monomerer mit Molekulargewichten (M_{w}) von mindestens 800 000 g/mol und einer engen Molmassenverteilung.

Diese Polymere auf der Basis vinylaromatischer Monomerer können sowohl Homopolymere als auch statistische Copolymere oder Blockcopolymere, wie alternierende Blockcopolymere, Sternblockcopolymere oder Drei- oder Fünfblockcopolymere, sein. Es kommen auch Mischungen unterschiedlicher Polymerer in Betracht. Bevorzugt werden Homopolymere eingesetzt. Die Polymere auf der Basis vinylaromatischer Monomerer können sowohl syndiotaktisch als auch ataktisch sein. Meist werden jedoch ataktische Polymere auf der Basis vinylaromatischer Monomerer eingesetzt.

Geeignete vinylaromatische Monomere haben in der Regel 8 bis 12 Kohlenstoffatome. Insbesondere kommen Styrol oder kern- oder seitenkettensubstituierte Styrole in Betracht. Als Beispiele seien o-Methylstyrol, m-Methylstyrol, p-Methylstyrol, und p-t-Butylstyrol genannt.

Daneben können auch andere Monomere mitverwendet werden, insbesondere solche, die sich anionisch mit den genannten Monomeren copolymerisieren lassen. Hierzu zählen Acrylnitril, Methacrylnitril, 2-Vinylpyridin, 4-Vinylpyridin und Vinylpyrrolidon.

Ganz besonders bevorzugte erfindungsgemäße Antitropfmittel enthalten Polystyrolhomopolymere.

Die Polymere auf Basis vinylaromatischer Monomerer weisen Molekulargewichte (Gewichtsmittelwert M_{w}) von mindestens 800 000 g/mol, beispielsweise 900 000 g/mol oder mehr auf. Im allgemeinen liegen die Molekulargewichte (M_{w}) im Bereich von 800 000 bis 2,8 x 10⁵ g/mol, bevorzugt im Bereich von 1 x 10⁶ bis 2,5 x 10⁶ g/mol. Nach einer besonders bevorzugten Ausführungsform liegen die Molekulargewichte (M_{w}) im Bereich von 1,1 x 10⁶ bis 2,3 x 10⁶, insbesondere 1,2 x 10⁶ bis 2,2 x 10⁶ g/mol.

Die Polymere auf der Basis vinylaromatischer Monomerer haben eine enge Molmassenverteilung, d.h. das Verhältnis von Gewichtsmittelzu Zahlenmittelwert der Molmassen M_{w}/Mₙ ist klein. Bevorzugt beträgt das Verhältnis M_{w}/Mₙ 2,5 oder weniger. Besonders bevorzugt ist M_{w}/Mₙ 2 oder kleiner, beispielsweise weniger als 1,8.

Die Polymere auf Basis vinylaromatischer Monomerer, die in den Antitropfmitteln enthalten sind, werden bevorzugt durch anionische Polymerisation hergestellt. Besonders bevorzugt wird die anionische Dispersionspolymerisation. Anionische Polymerisationsverfahren sind an sich bekannt. Im allgemeinen wird die Polymerisation in Gegenwart stoichiometrischer Mengen organischer Lithiumverbindungen, bevorzugt Alkyllithiumverbindungen, insbesondere n-Butyllithium, s-Butyllithium oder t-Butyllithium durchgeführt.

Bei der anionischen Dispersionspolymerisation wird die Reaktion in der Regel in einem inerten Lösungsmittel, in dem das Polymer nicht löslich ist, durchgeführt. Die Reaktion kann auch in einer Lösungsmittelmischung aus kurzkettigen und langkettigen aliphatischen Kohlenwasserstoffen ausgeführt werden. Zu den geeigneten Lösungsmitteln zählen Butan, Isobutan, Pentan, Isopentan, Hexan, Heptan, 2,2-Dimethylbutan, Petrolether oder Cyclohexan. Diese können in Mischung mit Kohlenwasserstoffen, die 14 oder mehr Kohlenstoffatome aufweisen, verwendet werden, darunter Tetradekan, Hexadekan, Octadekan oder Eicosan sowie flüssige Oligomere von Olefinen wie Ethylen oder höhere Olefine mit 3 bis 12 Kohlenstoffatomen wie Decen.

Feste Oligomere der genannten Olefine oder auch Polystyrole oder Polysiloxane niedrigen Molekulargewichts können als Cosolventien mitverwendet werden.

Die Reaktion kann auch in Gegenwart polymerer Dispergierhilfsmittel ausgeführt werden, die das gebildete Polymer in Suspension halten. Als Dispergierhilfsmittel kommen z.B. Copolymerisate aus Styrol und Butadien, Isopren oder hydrogenierten Isoprenen in Betracht.

Besonders bevorzugt ist die Verwendung von Pentan als Lösungsmittel und von Styrol-Butadien-Blockcopolymeren als Dispergierhilfsmittel.

Geeignete Styrol-Butadien-Blockcopolymere sind z.B. Zweiblockcopolymere des Typs a-b, wobei a einen Polymerblock aus Styrol und b einen Polymerblock aus Butadien, bevorzugt 1,4-Polybutadien, bedeutet. Die Summe der Komponenten a und b beträgt 100 Gew.-%, wobei die Zusammensetzung von a und b variieren kann. So kann a von 10 bis 90 Gew.-% und entsprechend b von 90 bis 10 Gew.-%, bevorzugt a zwischen 20 und 80 Gew.-% und b zwischen 80 und 20 Gew.-% liegen. Geeignet sind z.B. die Handelsprodukte ®Nippon NS 312, ®Buna KA 8497, ®Kraton G 1701X und ®Septon 1001.

Ein besonders geeignetes Styrol-Butadien-Blockcopolymer ist z.B. ein Styrol-Butadien-Zweiblockcopolymer, das hydriert sein kann und das in einer Menge von z.B. 1 bis 10 Gew.-% bezogen auf das vinylaromatische Monomere verwendet wird. Zweckmäßig wird es der zu polymerisierenden Dispersion gelöst im Monomeren zugesetzt.

Zur Herstellung statistischer Copolymerer können Verbindungen mitverwendet werden, die die Tendenz zur statistischen Verteilung fördern. Derartige Verbindunge sind z.B. Tetrahydrofuran, Tetramethylethylendiamin, Kaliumamylat oder t-Butylphosphat.

Das Polymerisationsverfahren wird meist bei Temperaturen im Bereich von 0 bis 100°C durchgeführt. Bevorzugte Reaktionstemperaturen liegen im Bereich von 0 bis 30°C. Die Reaktion kann sowohl bei Normaldruck als auch bei erhöhten Drücken durchgeführt werden.

Meist genügt es, wenn die Antitropfmittel in kleinen Mengen, z.B. etwa 0,5 bis 25 Gew.-%, bezogen auf die gesamte Zusammensetzung, in den thermoplastischen Formmassen enthalten sind. Bevorzugte Zusammensetzungen aus thermoplastischen Formmassen und Antitropfmitteln enthalten 1 bis 20, insbesondere 1 bis 15 Gew.-% Antitropfmittel.

Die Herstellung der erfindungsgemäßen Formmassen erfolgt zweckmäßigerweise durch Mischen der Komponenten bei Temperaturen im Bereich von 230 bis 320°C in üblichen Mischvorrichtungen, wie z.B. Knetern, Banburrymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls mehrere Komponenten vorgemischt sein oder es können auch alle Komponenten gemeinsam gemischt werden.

Aus den erfindungsgemäßen Formmassen, welche sehr gute Fließfähigkeit, gute Thermooxidationsbeständigkeit, gute multiaxiale Zähigkeit und günstiges Spannungsrißverhalten besitzen, lassen sich z.B. durch Spritzguß oder Extrusion Formkörper herstellen, die flammwidrig sind und hervorragende mechanische Eigenschaften aufweisen.

Die erfindungsgemäßen Formmassen eignen sich sehr gut zur Herstellung von Formteilen aller Art, z.B. durch Spritzguß oder Extrusion. Sie können weiterhin zur Herstellung von Folien und Halbzeug im Tiefzieh- oder Blasverfahren verwendet werden.

### Beispiel

Unter Verwendung der im folgenden aufgelisteten Komponenten A - F werden erfindungsgemäße Formmassen 1, 2 und 3 hergestellt und mit den Vergleichsformmassen V1-V6 hinsichtlich ihren charakteristischen Eigenschaften verglichen.
Komponente A
   Poly-2,6-dimethyl-1,4-phenylenether mit einem mittleren Molekulargewicht (M_{W}) von 40000 g/mol.
Komponente B₁
   Schlagfestes Polystyrol mit 9 Gew.-% Polybutadien und Zellteilchenmorphologie, mittlere Teilchengröße der Weichkomponente von 1 µm. Die VZ der Hartmatrix betrug 80 ml/g (0,5%-ig in Toluol bei 23°C).
Komponente B₂
   Schlagfestes Polystyrol mit 9 Gew.-% Polybutadien und Zellteilchenmorphologie, mittlere Teilchengröße der Weichkomponente 5 µm. Die VZ der Hartmatrix betrug 80 ml/g (0.5%-ig in Toluol bei 23°C).
Komponente C₁
   Resorcinoldiphenylphosphat, Handelsprodukt Fyrolflex RDP (Akzo).
Komponente C₂
   Triphenylphosphat, z.B. Disflamoll TP.
Komponente D₁
   Octadeyl-3-(3,5-bis-(1,1-dimethylethyl)-4-hydroxyphenyl)-propionat, z.B. Irganox 1076 der Firma Ciba Geigy.
Komponente D₂
   Tetrakis-(2,4-bis-(1,1-dimethylethyl)-phenyl)-4,4'-diphenylendiphosphonit, z.B. Irgafos PEPQ der Firma Ciba Geigy. Für Vergleichsversuche werden folgende Komponenten D₃ und D₄ verwendet:
Komponente D₃
   ZnO
Komponente D₄
   Bis-(2,4-di-t-butylphenyl)pentaerythritdiphosphit z.B. Ultranox 626 der Firma General Electrics.
Komponente E
   SEPS Blockkautschuk, z.B. Kraton G 1650 (Shell AG).
Komponente F
   Teflon-Dispersion 60 N der Firma Du Pont.

Herstellung der thermoplastischen Formmassen:

Die Komponenten A) bis F) wurden auf einem Zweiwellenextruder (ZSK 30 der Fa. Werner & Pfleiderer) bei 270°C gemischt, als Strang ausgetragen, gekühlt und granuliert.

Bestimmung der Eigenschaften der thermoplastischen Formmassen:

Das getrocknete Granulat wurde bei 250 bis 280°C zu Rundscheiben, Flachstäben der Dicke 1/16" für die UL 94-Prüfung und Zugstäben verarbeitet.

Die Schädigungsarbeit W_{S} wurde nach DIN 53 443 bei 23°C bestimmt. Zur Beurteilung der Wärmealterungsbeständigkeit wurden Rundscheiben der Proben 14 Tage bei 90°C gelagert und anschließend die Schädigungsarbeit bestimmt.

Die Flammwidrigkeit wurde nach UL 94 an Stäben von 1/16"-Dicke bestimmt, die angeführten Brandzeiten stellen die Summe der Brandzeiten aus beiden Beflammungen dar.

Die Fließfähigkeit der Formmassen wurde nach DIN 53 735 bei einer Massetemperatur von 275°C und einer Belastung von 21,6 kg ermittelt.

Die Spannungsrißfestigkeit wurde qualitativ nach einer der Biegestreifenmethode ähnlichen Variante bestimmt. Dabei wurden Zugstäbe auf eine Schablone mit Biegradius von 120 mm aufgespannt und für 10 s mit Tributylphosphat benetzt. Danach wurde die Zeit (^{t}Br) bis zum Bruch bestimmt.

Die Zusammensetzungen und Eigenschaften der hergestellten thermoplastischen Formmassen sind in Tabelle 1 zusammengestellt.

**Tabelle 1:**

| Formmasse Nr. | V1 | 1 | V2 | V3 | V4 | V5 | V6 | 2 | 3 |
|---|---|---|---|---|---|---|---|---|---|
| Komponente [Gew.-%] | | | | | | | | | |
| A | 54,3 | 54,3 | 54,9 | 54,3 | 54,3 | 54,3 | 54,3 | 54,3 | 43,4 |
| B₁ | 37,7 | 37,7 | 38,0 | 37,7 | 37,7 | 37,7 | 37,7 | 29,8 | 43,6 |
| B₂ | - | - | - | - | - | - | - | 7,9 | - |
| C₁ | - | 4 | 4,1 | 4 | 4 | 4 | 4 | 4 | 8,2 |
| C₂ | 4 | - | - | - | - | - | - | - | - |
| D₁ | 0,5 | 0,5 | - | 1 | - | 0,5 | 0,5 | 0,5 | 0,5 |
| D₂ | 0,5 | 0,5 | - | - | 1 | - | - | 0,5 | 0,5 |
| D₃ | - | - | - | - | - | 0,5 | - | - | - |
| D₄ | - | - | - | - | - | - | 0,5 | - | - |
| E | 3 | 3 | 3 | 3 | 3 | 3 | 3 | 3 | 3,5 |
| F | - | - | - | - | - | - | - | - | 0,3 |
| W_{S} [Nm] | 27 | 31 | 32 | 31 | 31 | 27 | 31 | 35 | 42 |
| W_{S'} 14 d [Nm] | 9 | 14 | 2 | 4 | 7 | 11 | 10 | 15 | 18 |
| UL 94 | V-1 | V-1 | V-1 | V-1 | V-1 | V-1 | V-1 | V-1 | V-1 |
| Brandzeit [s] | 103 | 99 | 112 | 110 | 120 | 134 | 104 | 105 | 134 |
| MVI [ml/10'] | 29 | 28 | 26 | 27 | 28 | 27 | 28 | 26 | 125 |
| t_{Br}[s] | 101 | >300 | >300 | 190 | 210 | 230 | 215 | >300 | >300 |

Wie die in Tabelle 1 aufgeführten Versuche belegen, weisen die erfindungsgemäßen Zusammensetzungen ein ausgewogenes Eigenschaftsprofil auf. Erwähnenswert ist insbesondere das günstige Spannungsrißverhalten (t_{Br}>300 s) und die gleichzeitig verbesserte Wärmealterungsbeständigkeit (Wₛ(14d) ≥ 14 Nm). Die ermittelten Daten zeigen insbesondere überraschend deutlich verbesserte Eigenschaften im Vergleich zu bekannten Formmassen gemäß EP 0 036 278 (= V1), EP 0 467 113 (= V6) und JP-A-04279660 (= V5).

## Patentansprüche

1. Flammwidrige thermoplastische Formmasse, enthaltend
A) mindestens einen Polyphenylenether, und
B) mindestens ein vinylaromatisches Polymer, **dadurch gekennzeichnet, daß** sie
C) mindestens eine Oligophosphorverbindung als Flammschutzmittel und
D) als Stabilisator eine Mischung aus
D₁) mindestens einem sterisch gehinderten Phenol und
D₂) mindestens einem Phosphonit
umfaßt, wobei die Oligophosphorverbindung ausgewählt ist unter Verbindungen der allgemeinen Formeln (I), (II) oder (III) 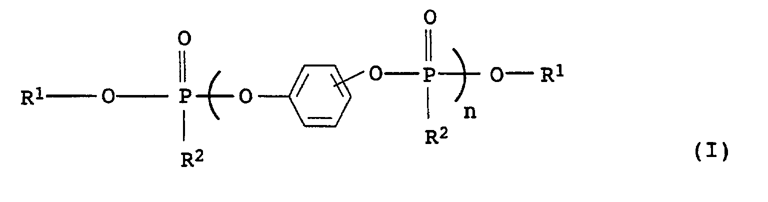 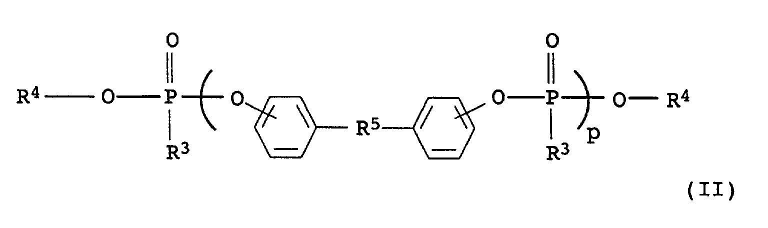 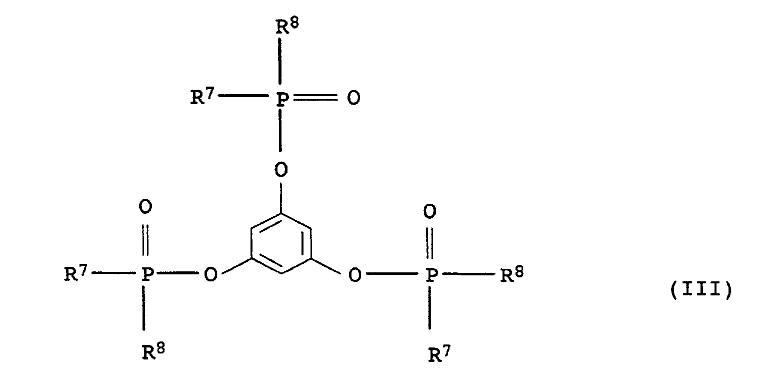 650/95
worin
R¹ und R⁴ unabhängig voneinander für gegebenenfalls substituiertes Alkyl oder Aryl stehen;
R² R³, R⁷ und R⁸ unabhängig voneinander für gegebenenfalls substituiertes Alkoxy oder Aryloxy stehen,
R⁵ für Alkylen, -SO₂-, -CO-, -N=N- oder -(R⁶)P(O)- steht, worin R⁶ für gegebenenfalls substituiertes Alkyl, Aryl oder Alkylaryl steht und
n und p unabhängig voneinander einen Wert von 1 bis 30 einnehmen.

2. Formmasse nach Anspruch 1, **dadurch gekennzeichnet, daß** als Flammschutzmittel Resorcinol- und/oder Hydrochinondiphenylphosphat eingesetzt wird.

3. Formmasse nach einem der vorhergehenden Ansprüche, **dadurch gekennzeichnet, daß** sie die Stabilisatormischung in einem Anteil von etwa 0,1 bis etwa 5 Gew.-%, bezogen auf das Gesamtgewicht der Masse, enthält.

4. Formmasse nach einem der vorhergehenden Ansprüche, **dadurch gekennzeichnet, daß** das sterisch gehinderte Phenol ausgewählt ist unter Verbindungen der allgemeinen Formel 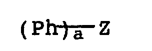
a einen ganzzahligen Wert von 1 bis 4 bedeutet,
Z für ein Wasserstoffatom oder wenn a für 2, 3 oder 4 steht, für eine Brückengruppe mit 2, 3 oder 4 gebundenen Ph-Gruppen steht,
Ph für eine sterisch gehinderte Phenolgruppe der Formel (IV) oder (V) steht, 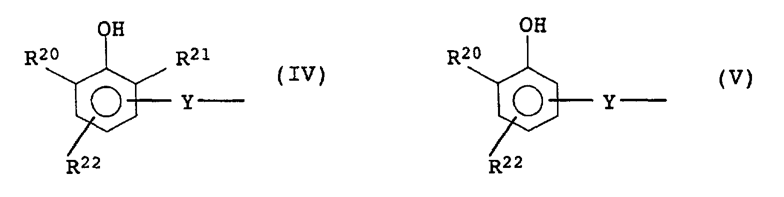
worin
R²⁰ für einen geradkettigen oder verzweigten C₄-C₁₀-Alkylrest steht,
R²¹ für ein Wasserstoffatom steht oder wie R²⁰ definiert ist,
R²² ausgewählt ist unter einem Wasserstoffatom, Alkyl, Alkoxy, Alkoxycarbonylalkyl, -P(O)(OR²³)₂, worin R²³ für C₁-C₂₀ Alkyl steht, Amino, gegebenenfalls substituiertem Arylamino oder gegebenenfalls substituiertem Heteroarylamino; und
Y für eine chemische Bindung oder Carbonylalkyl steht.

5. Formmasse nach Anspruch 4, **dadurch gekennzeichnet, daß**, wenn a für 2 steht, Z für -S-, -O-, -N-, Alkylen, Cycloalkylen, Cycloalkyliden, oder Diiminoalkylen steht;
a für 3 steht, Z für 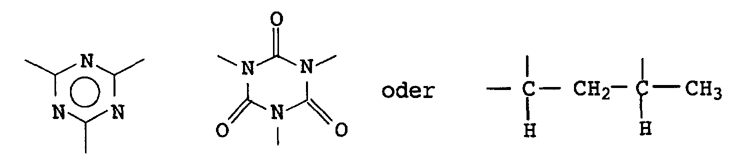 steht;
a für 4 steht, Z für 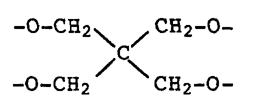 steht.

6. Formmasse nach einem der Ansprüche 1 bis 4, **dadurch gekennzeichnet, daß** das Phosphonit ausgewählt ist unter Verbindungen der allgemeinen Formel (VI) 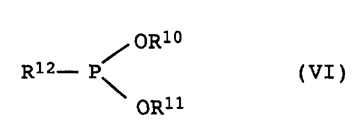 worin
R¹⁰ und R¹¹ gleich oder verschieden sind und ansgewählt sind unter einem Wasserstoffatom, einem geradkettigen oder verzweigten Alkylrest und einem gegebenenfalls substituierten Aryl- oder Aralkylrest, und
R¹² für einen geradkettigen oder verzweiten Alkylrest, für einen gegebenenfalls substituierten Aryl- oder Aralkylrest oder für 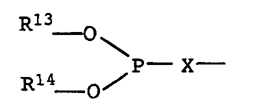
steht, worin
-X- für einen gegebenenfalls substituierten Alkylen- oder gegebenenfalls substituierten Arylenrest steht; und
R¹³ und R¹⁴ unabhängig voneinander die Bedeutungen von R¹⁰ und R¹¹ besitzen.

7. Formmasse nach Anspruch 6, **dadurch gekennzeichnet, daß** das Phosphonit ausgewählt ist unter Verbindungen der allgemeinen Formel (VI), worin R¹⁰, R¹¹, R¹³ und R¹⁴ unabhängig voneinander für eine gegebenenfalls ein- oder mehrfach substituierte Aryl- oder Aralkylgruppe stehen, wobei die Substituenten ausgewählt sind unter geradkettigen oder verzweigten C₁-C₁₀-Alkylresten, und X für Phenylen oder Biphenylen steht.

8. Formmasse nach einem der vorhergehenden Ansprüche, **dadurch gekennzeichnet, daß** als sterisch gehindertes Phenol Octadecyl-3-(3,5-bis-(1,1-dimethylethyl)-4-hydroxyphenol)propionat und als Phosphonit Tetrakis-(2,4-bis-(1,1-dimethylethyl)-phenyl)-4,4'-diphenylendiphosphonit im Verhältnis von etwa 1:9 bis etwa 9:1 eingesetzt werden.

9. Formmasse nach einem der vorhergehenden Ansprüche, enthaltend
A) etwa 5 bis etwa 97,9 Gew.-% Polyphenylenether,
B) etwa 1 bis etwa 93,9 Gew.-% Styrolpolymerisat,
C) etwa 1 bis etwa 20 Gew.-% Flammschutzmittel,
D) etwa 0,1 bis etwa 5 Gew.-% Stabilisatormischung, die jeweils bezogen auf das Gesamtgewicht der Komponente D,
D1) etwa 5 bis etwa 95 Gew.-% eines sterisch gehinderten Phenols und
D2) etwa 5 bis etwa 95 Gew.-% eines Phosphonits
umfaßt,
E) 0 bis etwa 50 Gew.-% Schlagzähmodifier sowie
F) 0 bis etwa 60 Gew.-% üblicher Zusätze.

10. Verwendung einer Formmasse nach einem der Ansprüche 1 bis 9 zur Herstellung von flammwidrigen Formkörpern, Fasern und Folien.

11. Flammwidrige Formkörper, Fasern und Folien, hergestellt unter Verwendung einer Formmasse nach einem der Ansprüche 1 bis 9.

## Claims

1. A flame-retardant thermoplastic molding composition comprising
A) at least one polyphenylene ether, and
B) at least one vinylaromatic polymer,
wherein the thermoplastic molding composition includes
C) at least one oligomeric phosphorus compound as flame retardant
and
D) a mixture of
D₁) at least one sterically hindered phenol and
D₂) at least one phosphonite
as stabilizer, wherein the oligophosphorus compound is selected from the group consisting of compounds of the formulae (I), (II) and (III) 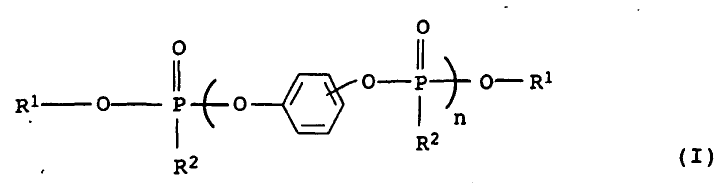 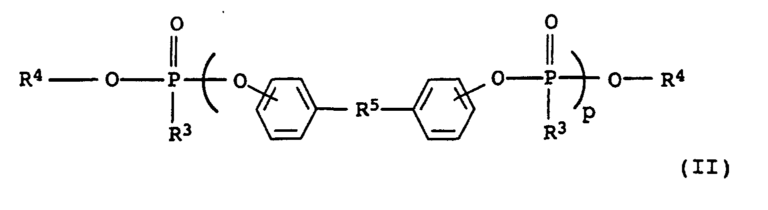 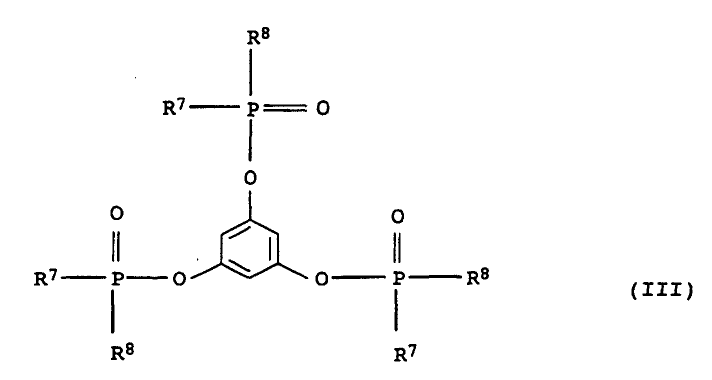
650/95
where
R¹ and R⁴, independently of one another, are unsubstituted or substituted alkyl or aryl;
R², R³, R⁷ and R⁸, independently of one another, are unsubstituted or substituted alkoxy or aryloxy,
R⁵ is alkylene, -SO₂-, -CO-, -N=N- or -(R⁶)P(O)-, where R⁶ is unsubstituted or substituted alkyl, aryl or alkylaryl and
n and p, independently of one another, are integers or non-integers from 1 to 30.

2. A molding composition as claimed in claim 1, wherein resorcinol diphenyl phosphate and/or hydroquinone diphenyl phosphate is used as flame retardant.

3. A molding composition as claimed in any of the preceding claims which contains the stabilizer mixture in a proportion of-from about 0.1 to about 5% by weight, based on the total weight of the composition.

4. A molding composition as claimed in any of the preceding claims, wherein the sterically hindered phenol is selected from the group consisting of compounds of the formula 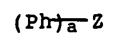 where
a is an integer from 1 to 4,
Z is hydrogen or, if a is 2, 3 or 4, a bridging group having 2, 3 or 4 bonded Ph groups,
Ph is a sterically hindered phenol group of the formula (IV) or (V), 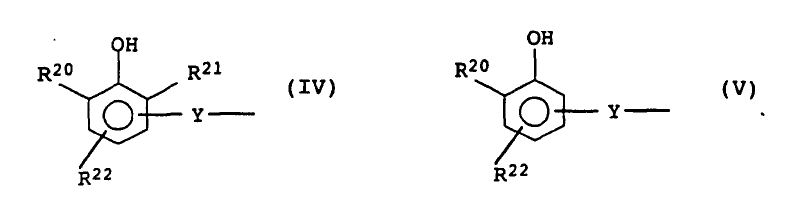
where
R²⁰ is straight-chain or branched C₄-C₁₀-alkyl,
R²¹ is hydrogen or is as defined for R²⁰,
R²² is selected from the group consisting of hydrogen, alkyl, alkoxy, alkoxycarbonylalkyl, -P(O)(OR²³)₂, where R²³ is C₁-C₂₀-alkyl, amino, unsubstituted or substituted arylamino and unsubstituted or substituted heteroarylamino; and
Y is a chemical bond or carbonylalkyl.

5. A molding composition as claimed in claim 4, wherein, if a is 2, Z is -S-, -O-, -N-, alkylene, cycloalkylene, cycloalkylidene or diiminoalkylene;
if a is 3, Z is 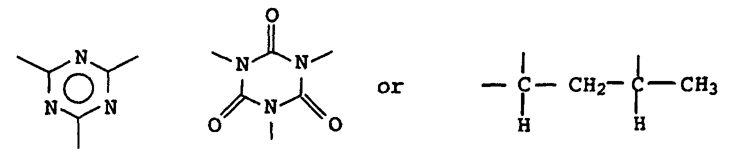 if a is 4, Z is

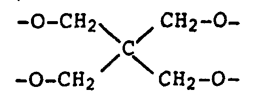

6. A molding composition as claimed in any of claims 1 to 4, wherein the phosphonite is selected from the group consisting of compounds of the formula (VI) 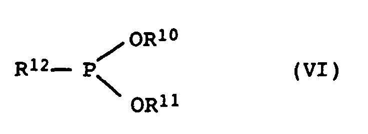 where
R¹⁰ and R¹¹ are identical or different and are selected from the group consisting of hydrogen, straight-chain or branched alkyl, unsubstituted or substituted aryl and unsubstituted or substituted aralkyl, and
R¹² is straight-chain or branched alkyl, unsubstituted or substituted aryl, unsubstituted or substituted aralkyl or 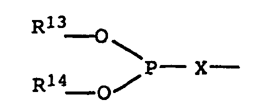
where
-X- is unsubstituted or substituted alkylene or unsubstituted or substituted arylene; and
R¹³ and R¹⁴, independently of one another, are as defined for R¹⁰ and R¹¹.

7. A molding composition as claimed in claim 6, wherein the phosphonite is selected from the group consisting of compounds of the formula (VI) where R¹⁰, R¹¹, R¹³ and R¹⁴, independently of one another, are unsubstituted or singly or multiply substituted aryl or unsubstituted or singly or multiply substituted aralkyl, the substituents being selected from the group consisting of straight-chain or branched C₁-C₁₀-alkyl radicals, and X is phenylene or biphenylene.

8. A molding composition as claimed in any of the preceding claims, wherein octadecyl 3-(3,5-bis(1,1-dimethylethyl)-4-hydroxyphenyl)propionate is used as sterically hindered phenol and tetrakis(2,4-bis(1,1-dimethylethyl)phenyl) 4,4'-diphenylenediphosphonite is used as phosphonite, in a ratio of from about 1:9 to about 9:1.

9. A molding composition as claimed in any of the preceding claims comprising
A) from about 5 to about 97.9% by weight of polyphenylene ether,
B) from about 1 to about 93.9% by weight of styrene polymer,
C) from about 1 to about 20% by weight of flame retardant,
D) from about 0.1 to about 5% by weight of stabilizer mixture of, based in each case on the total weight of component D,
D₁) from about 5 to about 95% by weight of a sterically hindered phenol and
D₂) from about 5 to about 95% by weight of a phosphonite,
E) from 0 to about 50% by weight of impact modifiers and
F) from 0 to about 60% by weight of conventional additives.

10. The use of a molding composition as claimed in any of claims 1 to 9 for preparing flame-retardant shaped articles, fibers or films.

11. A flame-retardant shaped article, fiber or film prepared using a molding composition as claimed in any of claims 1 to 9.

## Revendications

1. Matière de moulage thermoplastique ignifugée contenant
A) au moins un poly(éther de phénylène) et
B) au moins un polymère vinylaromatique,
**caractérisée en ce qu'**elle comprend
C) au moins un oligocomposé du phosphore en tant qu'agent ignifuge, et
D) en tant que stabilisant un mélange constitué de
D₁) au moins un phénol à encombrement stérique et
D₂) au moins un phosphonite,
où le composé d'oligophosphore est choisi dans le groupe formé par les composés de formule générlale (I), (II) ou (III) 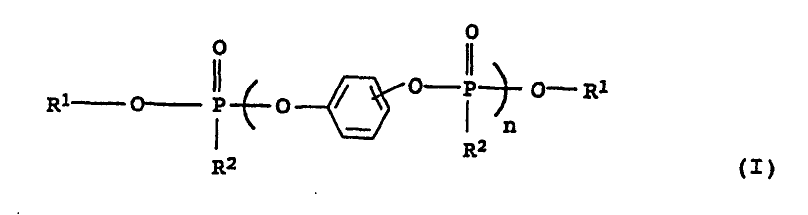 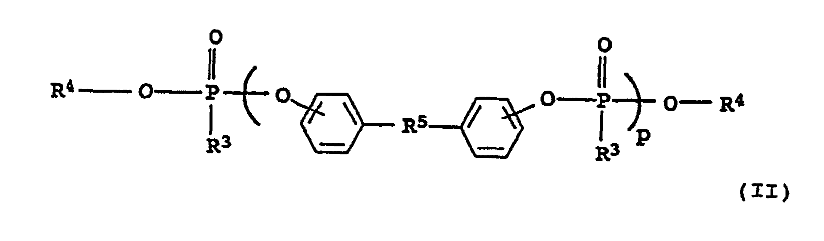 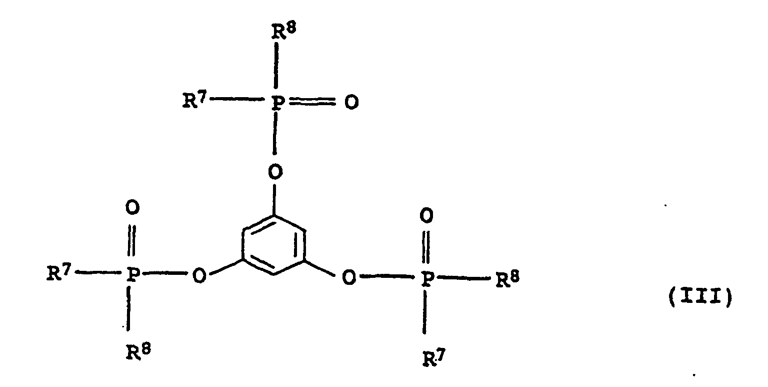 dans lesquelles
R¹ et R⁴ représentent, indépendamment l'un de l'autre, un groupe aryle ou alkyle qui est éventuellement substitué;
R² R³, R⁷ et R⁸ représentent, indépendamment l'un de l'autre, un groupe aryloxy ou alcoxy qui est éventuellement substitué,
R⁵ représente un groupe alcène, -SO₂-, -CO-, -N=N-, ou -(R⁶)P(O)-, formule dans laquelle R⁶ représente un groupe alkylaryle, aryle ou alkyle qui est éventuellement substitué et
n et p représentent, indépendamment l'un de l'autre, un nombre compris entre 1 et 30.

2. Matière de moulage selon la revendication 1, **caractérisée en ce que** l'on met en oeuvre, en tant qu'agent ignifuge, le diphénylphosphate d'hydroquinone et/ou de résorcinol.

3. Matière de moulage selon l'une quelconque des revendications précédentes, **caractérisée en ce qu'**elle contient un mélange stabilisant à raison d'environ 0,1% à 5% en poids par rapport au poids total de la matière.

4. Matière de moulage selon l'une quelconque des revendications précédentes, **caractérisée en ce que** le phénol à encombrement stérique est choisi parmi les composés de formule générale 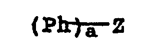 dans laquelle
a représente un nombre entier compris entre 1 et 4,
Z représente un atome d'hydrogène ou, dans le cas où a vaut 2, 3 ou 4, représente un groupe de pontage qui présente 2, 3 ou 4 groupes Ph liés,
Ph représente un groupe phénol à encombrement stérique de formule (IV) ou (V), 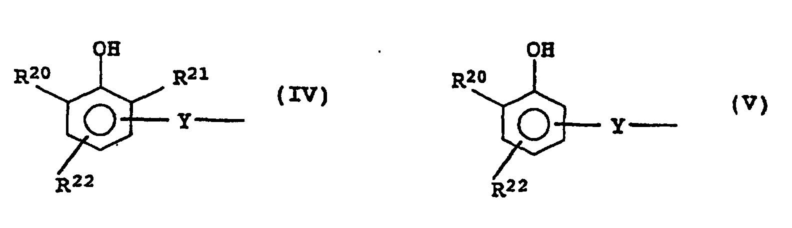
dans lesquelles
R²⁰ représente un reste alkyle en C₄ à C₁₀ à chaîne linéaire ou ramifiée,
R²¹ représente un atome d'hydrogène ou prend la signification de R²⁰,
R²² est choisi dans le groupe formé par un atome d'hydrogène, un groupe alkyle, alcoxy, alcoxycarbonylalkyle, amino, arylamino qui est éventuellement substitué ou hétéroarylamino qui est éventuellement substitué, et -P(O)(OR²³)₂, formule dans laquelle R²³ représente un groupe alkyle en C₁ à C₂₀; et
Y représente une liaison chimique ou un groupe carbonylalkyle.

5. Matière . de moulage selon la revendication 4, **caractérisée en ce que**, dans le cas où a représente le nombre 2, Z représente -S-, -O-, -N-, un groupe alcène, cycloalcène, cycloalkylidène ou diiminoalcène;
dans le cas où a représente le nombre 3, Z représente 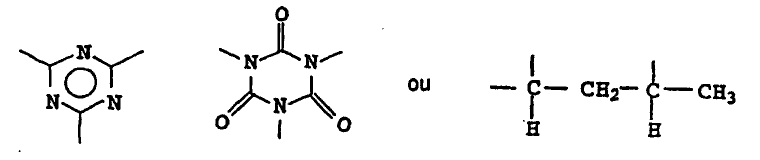 dans le cas où a représente le nombre 4, Z représente

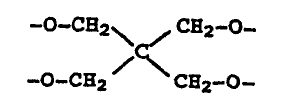

6. Matière de moulage selon l'une quelconque des revendications 1 à 4, **caractérisée en ce que** l'on choisit le phosphonite parmi les composés de formule générale (VI) 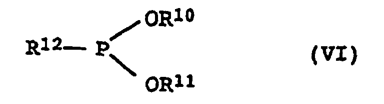 dans laquelle
R¹⁰ et R¹¹ sont identiques ou différents et choisis dans le groupe formé par un atome d'hydrogène, un reste alkyle à chaîne linéaire ou ramifiée et un reste aralkyle ou aryle qui est éventuellement substitué, et
R¹² représente un reste alkyle à chaîne linéaire ou ramifiée, un reste aralkyle ou aryle qui est éventuellement substitué ou 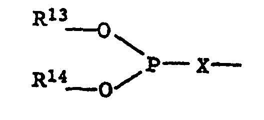
formule dans laquelle
-X- représente un reste alcène qui est éventuellement substitué ou un reste arylène qui est éventuellement substitué; et
R¹³ et R¹⁴ prennent indépendamment l'un de l'autre la signification de R¹⁰ et de R¹¹.

7. Matière de moulage selon la revendication 6, **caractérisée en ce que** l'on choisit le phosphonite parmi les composés de formule générale (VI) dans laquelle R¹⁰, R¹¹, R¹³ et R¹⁴ représentent, indépendamment l'un de l'autre, un groupe aralkyle ou aryle qui est éventuellement substitué de manière unique ou multiple, les substituants étant choisis parmi les restes alkyle en C₁ à C₁₀ à chaîne linéaire ou ramifiée, et X représentant un groupe phénylène ou biphénylène.

8. Matière de moulage selon l'une quelconque des revendications précédentes, **caractérisée en ce que** l'on met en oeuvre, en tant que phénol à encombrement stérique, le propionate d'octadécyl-3-(3,5-bis-(1,1-diméthyléthyl)-4-hydroxyphénol) et, en tant que phosphonite, le diphosphonite de tétrakis-(2,4-bis-(1,1-diméthyléthyl)-phényl)-4,4'-diphénylène dans un rapport d'environ 1:9 à environ 9:1.

9. Matière de moulage selon l'une quelconque des revendications précédentes contenant
A) le poly(éther de phénylène) à raison d'environ 5% à environ 97,9% en poids,
B) le polymère de styrène à raison d'environ 1% à environ 93,9% en poids,
C) l'agent ignifuge à raison d'environ 1% à environ 20% en poids,
D) le mélange stabilisant à raison d'environ 0,1% à environ 5% en poids qui contient, chaque fois par rapport au poids total du composant D,
D1) le phénol à encombrement stérique à raison d'environ 5% à 95% en poids et
D2) le phosphonite à raison d'environ 5% à 95% en poids,
E) un agent de modification de résistance aux chocs à raison de 0 à environ 50% en poids ainsi que
F) des adjuvants habituels à raison de 0 à environ 60% en poids.

10. Mise en oeuvre de la matière de moulage selon l'une quelconque des revendications 1 à 9 pour la fabrication de fibres, de films et de corps moulés ignifugés.

11. Fibres, films et corps moulés ignifugés que l'on a préparés en employant la matière de moulage selon l'une quelconque des revendications 1 à 9.
